# EUROPEAN PATENT APPLICATION

(11) **EP 2 290 602 A1**
(43) Date of publication of application: **02.03.2011**
(21) Application number: 10008300.5
(22) Date of filing: 09.08.2010
(51) Int. Cl.: G06Q 30/00

(54) **Web site trigger optimization system driving cross-channel operations**

(30) Priority: 31.08.2009 US 238343 P
(71) Applicant: Accenture Global Services GmbH, 8200 Schaffhausen (CH)
(72) Inventor: Phillips, Hikaru, Tamarama NSW 2026 (AU); Natoli, Claudio, Glenwood NSW 2768 (AU)
(74) Representative: Müller-Boré & Partner Patentanwälte

(57) **Abstract**

A marketing optimization system triggers offline marketing actions based on online behavior. The system stores trigger events including conditions for each trigger event. The system also stores captured online behavior. The system includes a cross-channel campaign engine configured to determine from the captured online behavior whether the conditions are satisfied for a stored trigger event. If the conditions are satisfied, the cross-channel campaign engine triggers an offline marketing action associated with the trigger event. The system also optimizes trigger events based on an analysis of the captured online behavior.

## Description

### PRIORITY

This application claims priority to U.S. provisional patent application serial number 61/238,343, filed on August 31, 2009, which is incorporated by reference in its entirety.

### BACKGROUND

Conventional web servers track visitors to their web sites via cookies or via log-ins. For example, many e-commerce sites store unique identifiers in a customer database which is used to identify site visitors. Also, the database may store information about the visitors' behavior, such as pages they visited, products they viewed, and actions they took (e.g., purchases, items that were clicked on, etc.).

Some web sites use the captured behavior of their visitors to recommend products that the visitor may be interested in purchasing based on products they previously viewed. This is done while the user is on the web site. However, beyond recommending products or providing some other product-related information to the user when the visitor is on the web site, companies are often unable to leverage the captured behavior for non-online channels, referred to as offline channels. For example, a company may engage in mail advertising campaigns or telephone campaigns. However, the company is unable to target their mail advertising campaigns or telephone campaigns based on online behavior of visitors to the brand web site.

### SUMMARY

According to an embodiment, a system triggers offline marketing actions based on online behavior. The system includes a variable definer configured to create variables by generating a graphic user interface allowing a user to utilize a predetermined syntax to enter an expression. The expression includes an online behavior and a condition related to the online behavior for each variable. The variable definer is configured to store the variables, including the expressions. The system also includes a trigger definer and a cross-channel campaign engine. The trigger definer is configured to create trigger events using at least one of the stored variables, and each trigger event includes at least one condition and an offline marketing action. The cross-channel campaign engine is configured to use a computer system to compare conditions in the trigger events with captured online behavior, and to determine from the comparison whether all the conditions are satisfied for at least one of the trigger events. An instruction is transmitted to an application to trigger the offline marketing action if all the conditions are satisfied for a trigger event.

According to an embodiment, a method for triggering offline marketing actions is based on captured online behavior. The method comprises storing captured online behavior received from browsers or web servers; creating variables describing aspects of the captured online behavior; and creating trigger events using at least one of the stored variables, wherein each trigger event includes at least one condition and an offline marketing action. The method further comprises comparing conditions in the trigger events with the captured online behavior; determining, by a computer system, from the comparison whether all the conditions are satisfied for at least one of the trigger events; and transmitting an instruction to an application to trigger the offline marketing action if all the conditions are satisfied for a trigger event.

The method for triggering offline marketing actions may be performed by software comprised of computer instructions stored on a non-transitory computer readable medium. The software, when executed, by a computer system performs the method.

### BRIEF DESCRIPTION OF DRAWINGS

The embodiments of the invention will be described in detail in the following description with reference to the following figures.

Figure 1 illustrates a system, according to an embodiment;

Figures 2A-C illustrate examples of screen shots that may be used to enter information to define variables, according to an embodiment;

Figure 3 illustrates a method for triggering an offline marketing action, according to an embodiment;

Figure 4 illustrates a method for optimizing a trigger event, according to an embodiment; and

Figure 5 illustrates a computer system operating as a hardware platform for the system and methods described herein, according to an embodiment.

### DETAILED DESCRIPTION OF EMBODIMENTS

For simplicity and illustrative purposes, the principles of the embodiments are described by referring mainly to examples thereof. In the following description, numerous specific details are set forth in order to provide a thorough understanding of the embodiments. It will be apparent however, to one of ordinary skill in the art, that the embodiments may be practiced without limitation to these specific details. In some instances, well known methods and structures have not been described in detail so as not to unnecessarily obscure the embodiments. Furthermore, different embodiments are described below. The embodiments may be used or performed together in different combinations.

According to an embodiment, a marketing optimization system is configured to trigger offline marketing actions based on captured online behavior and customizable trigger events. The captured online behavior may include any measurable or trackable event of a visitor to a web site on the Internet. This may include actions performed on a web page, such as clicked objects, web pages visited, identification of a web page or web site visited that brought the visitor to the web site, identification of a keyword of a search performed at a search engine that identified the web site, etc. The captured online behavior may include visitor characteristics if the characteristics can be discerned.

The offline marketing actions include any action that is performed off the web site. For example, the offline marketing actions may include sending information related to marketing through the postal mail, email, SMS text, through a telephone call or other offline channel. The information may include coupons, offers, product information, or other types of marketing information. The offline marketing action may include setting a flag in a database providing indication that a condition or set of conditions is met. Note that the offline marketing action may include an action not performed through the Internet.

If a trigger event is detected, an associated offline marketing action is performed. The trigger event may include one or more conditions. A condition may be associated with online behavior that can be detected and tracked. For example, if all the conditions for a tracking event are satisfied, then the corresponding offline marketing action is triggered.

The marketing optimization system includes a user interface that allows users to create and store trigger events, and the trigger events may be modified as needed by the users. Thus, the trigger events are customizable by the user by allowing the user to define any capturable set of events to trigger offline sales and marketing campaign actions. This ability allows a marketer to explore many potential events and explore triggers for optimal targeting of marketing. Furthermore, the trigger events, for example, are not hard coded in a web page, and so no Information Technology (IT) administrator is needed to customize or otherwise modify the trigger events. Thus, the marketing optimization system may be outside the web site and is used to trigger offline marketing actions based on customizable triggers.

In addition, the marketing optimization system is configured to organize raw data regarding online and offline user behavior through use of customizable variables that appropriate semantic meaning to the data. The variables may be used for reporting, analytics, and auto-optimization, and to provide the triggering of offline marketing actions. One technical aspect of the embodiments provided through a variable definer of the marketing optimization system includes using a predetermined syntax and/or format to enter expression through a user interface. The expressions allow users to enter data through a user interface to create variables, which can be used to define trigger events. The variable definer, through use of the expressions, allows variables and trigger events to be modified on the fly, as opposed to being hard-coded into a web page or software. Thus, the variables and trigger events are easily modifiable in response to feedback from newly captured online behavior, and the variables and trigger events may be modified by non-IT personnel responsible for optimizing trigger events.

It is also worth noting that cross channel marketing campaigns may have a relatively high contact cost. For example, costs for instituting telephone-based marketing can be expensive. According to an embodiment, the marketing optimization system is configured to determine the optimal trigger events and the optimal triggered marketing actions to maximize sales. The optimization may consider the cost of the offline marketing action, as well as probability of achieving a sale and a value of a sale if achieved. Thus, the marketing optimization system matches the right trigger event with the correct follow up approach to ensure that the trigger event can lead to an overall contact approach that creates more value than it costs.

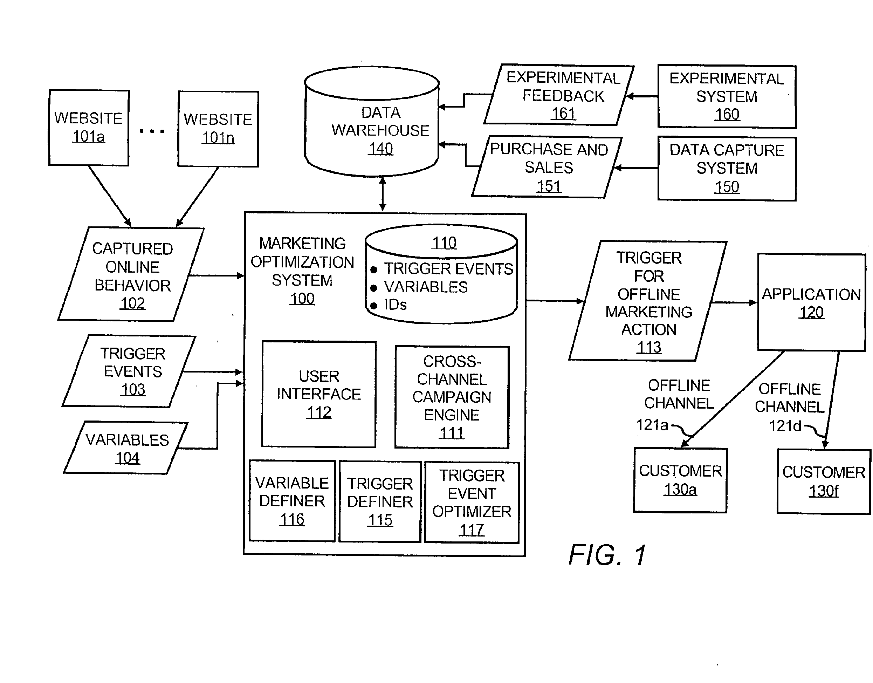

Figure 1 illustrates a marketing optimization system 100, according to an embodiment. Online behavior 102 is captured from web sites 101a-n. In one embodiment, scripts and plug-ins are used to capture the online behavior 102. For example, JAVA scripts or other types of scripts are provided in web pages and the scripts instruct the web server to store and send online behavior events to the marketing optimization system 100. For example, a JAVA script on a home page of the web site 101 a may instruct a web server to store the keyword phrase that caused a visitor to visit the web site, which web site the visitor came from, and the actions performed by the visitor on the home page. Plug-ins provide additional functionality on the web pages, and as the functions are performed data is stored and sent to the marketing optimization system 100 as instructed by the scripts. In one example, a visitor to any of web sites 101 a-n is assigned an anonymous ID, and the captured online behavior is associated with the ID and stored with the ID at the marketing optimization system 100, for example, in a database 110. The ID may later be correlated with customer contact information in order to provide offline marketing information to the customer associated with trigger events and the captured online behavior for the customer. Online behavior may also be captured by web browsers and transmitted to the web server or the marketing optimization system 100. The marketing optimization system 100 may also store and retrieve data from a data warehouse 140. Data used by the marketing optimization system 100 may be stored in the database 110 and/or the data warehouse 140.

The marketing optimization system 100 includes a trigger definer 115, a variable definer 116, a trigger optimizer 117, a cross-channel campaign engine 111, and a user interface 112. The trigger definer 115 and the variable definer 116 create and store trigger events 103 and variables 104 in the database 110 and/or the data warehouse 140, as described in detail below. The trigger definer 115 and the variable definer 116 allow information for the trigger events 103 and the variables 104 to be provided and customized by users via the user interface 112 and allow trigger events to be optimized. The user interface 112 may be an online interface that allows a user to login to the marketing optimization system 100 and enter and customize the trigger events 103 and the variables 104. Other information may be entered by the user and provided to the user via the user interface 112. Note that figure 1 shows the trigger events 103 and variables 104 received by the system 100. However, as described herein, this may include information for the trigger events 103 and the variables 104, and this information is used by the trigger definer 115 and the variable definer 116 to generate the trigger events 103 and variables 104.

The trigger events 103 may each include one or more conditions and one or more offline marketing actions. Conditions have to be met in order to trigger the corresponding offline marketing actions identified in a trigger event. Examples of conditions in a trigger event include a customer clicks an object for a particular product, the customer does not purchase the product, and the customer does not return to the web site within 24 hours of leaving the web site without purchase. An example of an offline marketing action for those conditions is to call or text the customer with an offer related to the product that was not purchased. Further conditions may be added to the trigger event to ensure that only visitors who had entered the site from a branded client keyword phrase from Google were included in an offline campaign providing the offer.

Another example of a trigger event is related to follow-on sales. For example, the conditions are that a user purchased a particular product online but has not purchased any accessories for the product within two weeks of the shipping date of the product. The offline marketing action for that trigger event may include sending an offer or coupon for accessories to the customer. It will be apparent to one of ordinary skill in the art that these are simply some examples of trigger events and other types of conditions and offline marketing actions may be included in trigger events.

The marketing optimization system organizes raw data regarding online and offline user behavior through use of the customizable variables 104, which appropriate semantic meaning to the data. The variables 104 may be used for reporting, analytics, and auto-optimization, and to provide the triggering of offline marketing actions. The variables may be used in the trigger events 103.

The cross-channel campaign engine 111 determines whether all the conditions are met for each trigger event by any visitors to the web sites 101 a-n. If all the conditions are met for a trigger event, the cross-channel campaign engine 111 triggers the offline marketing action, shown as 113, identified by the trigger event. For example, the cross-channel campaign engine 111 queries the database 110 to determine whether captured online behavior 102 for each visitor includes all the conditions for any of the trigger events 103. The captured online behavior 102 may be associated with a unique ID for each visitor. If all the conditions are met, for example by a single visitor, then the offline marketing action identified by the trigger event is triggered. The unique ID may be matched with customer contact information to identify and send promotional information to the customer (e.g., the web site visitor with all the matching conditions) or perform other offline marketing actions with the customer.

Triggering of the offline marketing action may include sending a list of visitors determined to satisfy all the conditions for a trigger event to an application 120. Lists may be sent in real-time as all conditions are met or on a periodic basis, such as hourly or daily. The application 120 may be an external system that performs the offline marketing action. The application 120 may be used by marketing personnel to perform the offline marketing action, such as for a telephone marketing campaign. Figure 1 shows the application 120 connected by offline channels 121 a-d to customers 130a-f. The offline channels 121 a-d may include telephone, mail, email, text, etc. The offline marketing action may be performed via the offline channels 121 a-d, such as sending promotional information via the offline channels 121 a-d.

Note that the trigger 113 may include additional information for each customer in terms of how an offline marketing campaign should be executed. For example, the trigger 113 may identify the offer to be provided and which offline channel to use to contact the customer. Also, after the campaigns are executed, response data for each customer can be provided to the marketing optimization system 100 or the application 120 to enable follow up offers and communications.

The data warehouse 140 may be connected to the marketing optimization system 100. The data warehouse 140 may include customer data and other information provided by systems external to the marketing optimization system 100. For example, the data warehouse 140 may store the customer IDs and related customer contact information which, as indicated above, are correlated with the unique IDs identifying the captured online behavior for each of the customers.

In one embodiment, the data warehouse 140 stores purchases and other successful business outcomes that have occurred for each customer using the customer IDs. The purchases (e.g., online and in-store) and other business information (e.g., customer interests in products, preferences for demographics, etc.) may be gathered from the captured online behavior 102 and other systems and stored in the data warehouse 140. The other systems may include data capture system 150 providing purchase and sales information 151 to the data warehouse 140. The data capture system 150 may include accounting systems or other conventional systems for tracking sales related information. The other systems may also include an experiment system providing experimental feedback 161 related to experimental trigger events and marketing actions that were successful or unsuccessful in triggering sales. The experiment system 160 is shown as a system external to the marketing optimization system 100 in figure 1, however, the experiment system 160 may be part of the marketing optimization system 100 rather than or in addition to an external experiment system.

The experiment system 160 conducts controlled experiments on one or more of the web sites 101a-n, such that different visitors receive different offers and different experiences. These online experiments are coordinated with multivariate experiments that occur offline by including appropriate variables in the lists generated by the marketing optimization system 100 that identify customers to be targeted by the offline marketing actions. The variables may identify variations in offers made to different customers or other variations in offline marketing actions that may be varied for different customers. The data warehouse 140 stores information regarding the coordinated online and offline experiments, including the variables and impacted customers, and receives and stores results of the experiments. The results include the results of the varied offline marketing actions, for example, as related to subsequent purchases. These results may be used by the marketing optimization system 100 and other systems as feedback for controlling the experiments to automatically determine the best web site content, best triggers, best offers, best customer contact rules, etc., to improve sales. Thus, the marketing optimization system 100 is configured to self-optimize online and offline content and actions to improve sales by implementing the online experiences (e.g., modified web pages or other modified online content) and offline marketing actions determined to be most successful for making sales.

For example, the marketing optimization system is used for experimentation to test different trigger events and conditions and to test different triggered online and offline marketing actions on test groups. The trigger events may be captured online behavior and may be defined by multiple conditions that need to be satisfied to trigger online and/or offline marketing actions for different test groups.

The test groups may be different sets of users/people that have the same set of predetermined graphics. In a simplistic example, an experiment is designed to test the response to marketing actions for luxury vehicles for males over 40 years old that have an income of over $150,000. Three sets of users are identified that have these characteristics. The conditions may be one or more predetermined keywords that are used in a search engine and clicking on a particular URL in the search results. One test group may get a mailed advertisement, another test group may get an email advertisement, and the third test group may get a telephone call including promotional information.

The response from each group is measured to determine which marketing action is the most effective for eliciting a consumer response. Also, sales may be measured as a result of the different actions. Various experiments may be run for different demographics and for different products to identify the most effective marketing actions, and these actions may then be implemented. Also, different conditions or different sets of conditions for trigger events, and different types of promotions may be evaluated through experimentation. Furthermore, different test groups may be provided with different online experiences by varying a web page for each test group, and then capturing the online behavior of the test groups.

The experimentation provides a mechanism, in a controlled environment, to get feedback and evaluate performance for determining the most effective trigger events and marketing actions to improve sales or for achieving another business objective. Furthermore, the experiments are quickly and easily implemented through the customizable trigger events.

An experiment may include determining experimental trigger events, for each incoming web site visitor. A set of variables are identified to be tested and implemented in the trigger events for testing. The system detects state changes for variables in the trigger events to determine whether offline marketing actions are to be triggered. For example, when the system determines that a state change has occurred on all event variables in a trigger event assigned to a given visitor, the system triggers the visitor for inclusion in additional (cross-channel) campaigns. Outcome data, such as sales, from the additional (cross-channel) campaigns is analyzed along with the trigger event/variable selection to determine the (optimal) set of variables to track on all (non-experimental) visitors in order to target outbound contact campaigns to those visitors with a maximal probability of successful follow-up, thereby making the most efficient use of the high outbound contact cost inherent in such campaigns.

The trigger optimizer 117 uses the information from the systems 150 and 160 to identify trigger events and marketing actions to implement. For example, based on the feedback of the success of the triggered offline marketing actions, such as whether or not a purchase was made, trigger definer 115 can make informed decisions on particular offline marketing actions to trigger for different customers to improve sales. This may include triggering offline marketing actions other than specified in a trigger event that have been determined to be successful for a particular customer or a group of customers having similar characteristics.

In addition to optimizing the offline marketing actions, the trigger optimizer 117 may also define trigger events based on an analysis of the data from the system 150 and 160. The analysis may identify trigger events for different users that are determined to most likely lead to sales. Furthermore, the trigger optimizer 117 may identify trigger events and offline marketing actions that ensure the trigger event can lead to an overall contact approach that creates more value than it costs. Also, the trigger optimizer 117 may generate recommendations to users via the user interface 112 to customize trigger events to include offline marketing actions that have been determined to be successful.

In one example, a trigger event is triggered for customer 130a based on online behavior of the customer 130a and the conditions of the trigger event. The corresponding offline marketing action is performed, which in this example, is to send a coupon offer via SMS text to the customer 130a and then call the customer 130a to remind the customer of the coupon offer if no purchase is made within a predetermined time period. The customer 130a makes an in-store purchase or an online purchase using the coupon after the call. The data warehouse 140 stores all the information regarding the transaction including the offline marketing actions (i.e., the SMS text and follow-up call with coupon offer) that were performed and the result of the offline marketing actions, which is the purchase. Based on the feedback of the success of the triggered offline marketing actions, such as whether or not a purchase was made, the trigger definer 115 can make informed decisions on particular offline marketing actions to trigger for different customers to improve sales. This may include triggering offline marketing actions other than specified in a trigger event that have been determined to be successful for a particular customer or a group of customers having similar characteristics. This also may include making recommendations to users via the user interface 112 to customize trigger events to include offline marketing actions that have been determined to be successful. These offline marketing actions may be implemented.

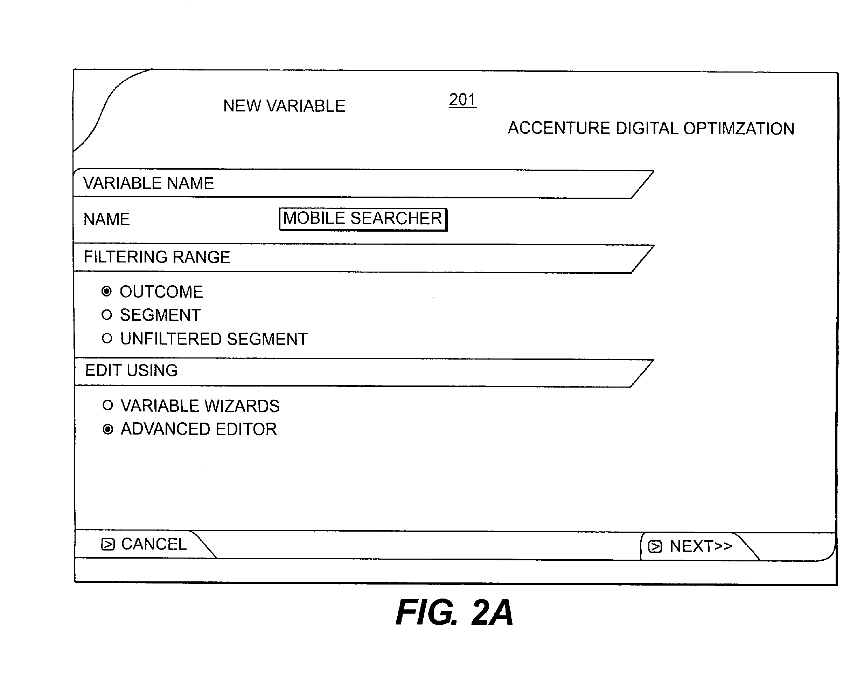

As described above, the variable definer 116 may be used to generate variables that impart semantic meaning to raw data regarding online and offline user behavior stored in the data warehouse 140. The variable definer 116 may utilize the user interface 112 to allow users to generate variables that define base events from collected data. Figures 2A-C illustrate screen shots 201-203 that may be generated by the variable definer 116 via the user interface 112 allowing users to define variables including base events. Screen shot 201 in figure 2A is where a user starts the process of defining a new variable. A variable name is entered, which in this example is "Mobile Searcher". Also, filtering and editor options may be selected.

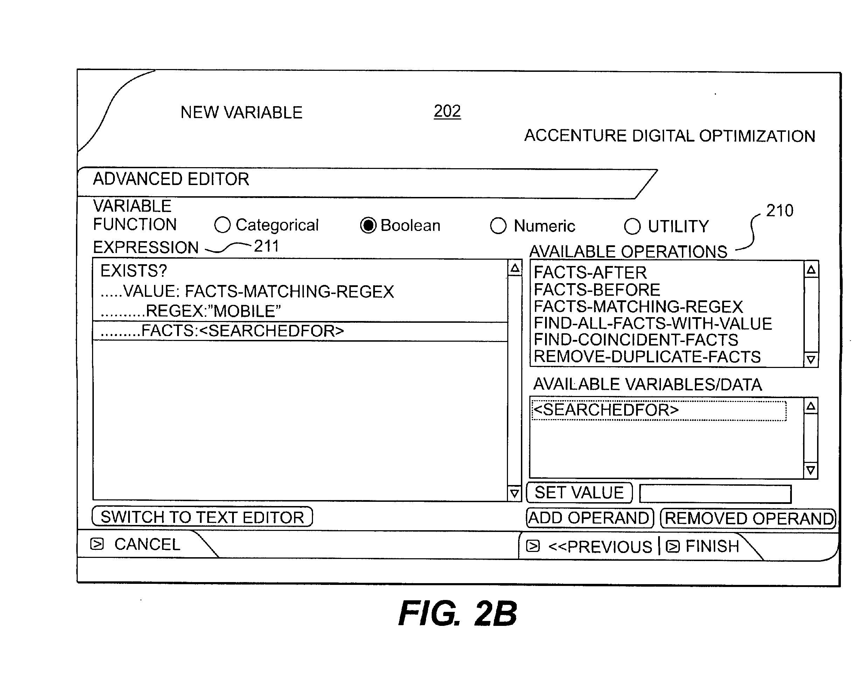

Screen shot 202 in figure 2B shows information that may be entered for the new variable. The variable function may be selected, which in this example is "Boolean". Also, an expression may be entered describing the variable in the expression section 211. Operations may be entered in the expression describing the base event. Examples of operations that may be entered are shown as available operations 210. "Facts" in the available operations 210 may refer to captured behaviors or actions of users. The captured behaviors are stored for example in the data warehouse 140. "Facts-After" may be used to identify all captured behaviors that are performed after some event took place, whereby the event can be expressed in the expression. Similarly, "Facts-Before" may be used to identify all captured behaviors that are performed before some event took place, whereby the event can be expressed in the expression. "Facts-Matching-Regex" may be used to identify a behavior associated with a text string. "Find-All-Facts-With-Value" may be used to identify specific behaviors that are associated with a value. "Find-Coincident-Facts"may be used to identify coincident behaviors, such as behaviors performed together or in short succession. "Remove-Duplicate-Facts" may be used to remove duplicate stored behaviors for the same user from the data warehouse 140. For example, the same behavior for a user may have been captured and stored in the data warehouse by two different systems and one may be removed.

The expression shown in section 211 includes the operation "Facts-Matching-Regex". This operation is being used to identify a behavior associated with the text string "mobile", and the behavior is defined as "<SearchedFor>". The "<SearchedFor>" behavior refers to the user behavior of conducting a search on a web site. The expression may also return a value. For example, if a user runs a search on the web site that includes "mobile" than the variable will have a value of 1. Otherwise the value is 0.

The expression shown in figure 2B is one example of a technical aspect of one or more of the embodiments. The expression allows users to enter data through a user interface to create variables, which can be used to define trigger events. The variable definer, through use of the expressions, allows variables and trigger events to be modified on the fly, as opposed to being hard-coded into a web page or software. Thus, the variables and trigger events are easily modifiable in response to feedback from newly captured online behavior, and the variables and trigger events may be modified by non-IT personnel responsible for optimizing trigger events.

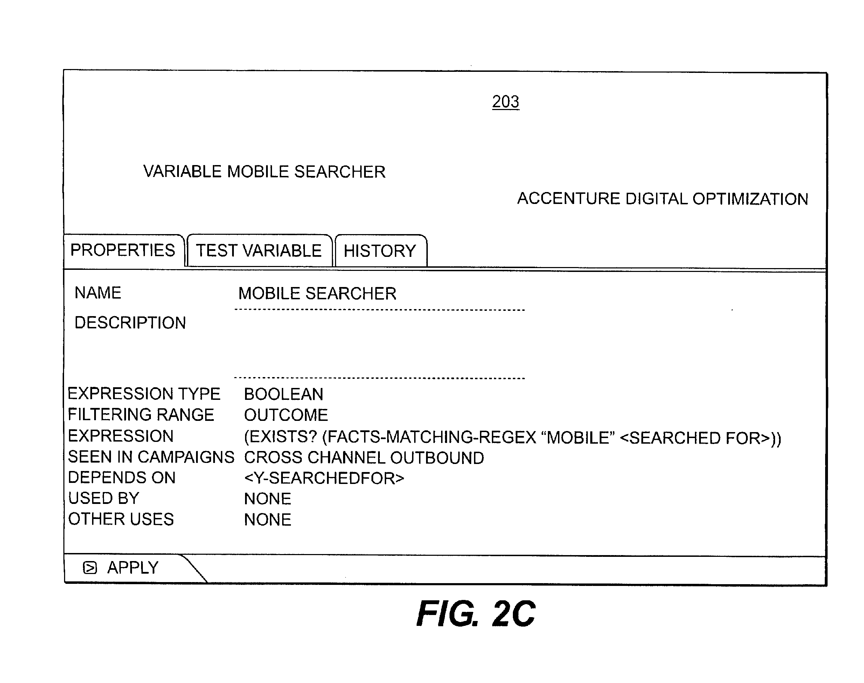

Figure 2C shows a screen shot 203 displaying the properties of the "Mobile Searcher" variable after it is created. The expression type, filtering range, and expression are shown. Also, the properties may identify any marketing campaign that the variable is used in, and variable dependencies, such as "<SearchedFor>".

After the variables are created, they may be stored in the database 110 and/or the data warehouse 110. Some of the variables may be used for report generation and other operations, and some of the variables may be used for trigger events. Variables that can return a value may be used for trigger events. For example, the "Mobile Searcher" variable may return a value of 1 or 0 depending on whether a search including "mobile" is conducted. The variable and value may be used as a condition in a trigger event to trigger an offline marketing action. For example, a trigger event may be defined that includes if the "Mobile Searcher" variable returns a value of 1 and the user performing the search is known to have purchased a mobile phone data plan, then trigger a text message sent to the user describing new data plans.

The trigger definer 115 may be used to create trigger events similarly to creating variables using the screen shots described above. For example, the trigger definer 115 allows users to enter expressions describing trigger events via the user interface 112. The trigger events are stored in the database 110 and/or the data warehouse 140.

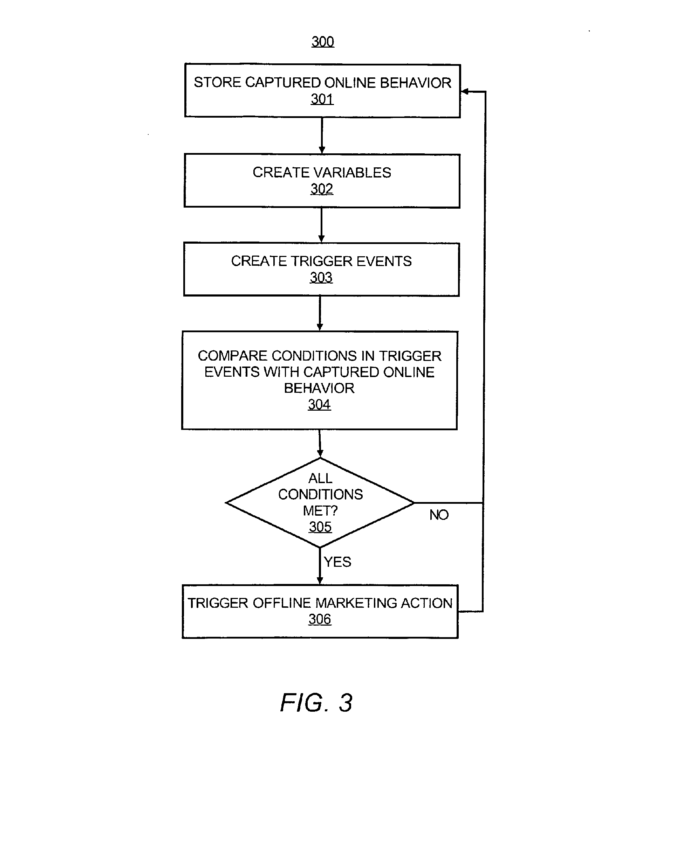

Figure 3 illustrates a method 300 for triggering an offline marketing action, according to an embodiment. The method 300 and other steps described herein may be described with respect to figure 1 by way of example and not limitation and may be performed in other systems.

At step 301, captured online behavior is stored, for example, in the data warehouse 140. The captured online behavior may include information received from user's web browsers, web servers, the data capture system 150, and/or the data capture system 160.

At step 302, the variable definer 116 creates variables describing aspects of the captured online behavior. The variable definer 116 may create variables by generating a graphic user interface allowing a user to utilize a predetermined syntax to enter an expression. Figures 2A-C show examples of screenshots for entering an expression and other information for defining a variable. A variable may identify one or more online behaviors and may include one or more conditions that may be used in a trigger event.

At step 303, the trigger definer 115 creates creating trigger events using at least one of the created variables. Each trigger event may includes at least one condition and an offline marketing action. Trigger events may be created using a graphic user interface and expressions, similarly to creating variables.

At step 304, the cross-channel campaign engine 111 compares conditions in the trigger events with the captured online behavior. For example, the cross-channel campaign engine 111 may determine whether a condition in a trigger event is satisfied. If the condition identifies an action performed by a user or an attribute of a user, then the condition is satisfied is the user performed the action or if the user's attribute matches the attribute in the trigger event.

If all conditions are satisfied for a trigger event, as determined at step 305, the offline marketing action in the trigger event is executed, at step 306. Step 306 may be performed for any trigger event having its conditions satisfied. Execution may include transmitting an instruction to the application 120 to trigger the offline marketing action if all the conditions are satisfied for the trigger event. If no trigger events are triggered, then the method 300 may be repeated. The method 300 may be repeated periodically or continuously.

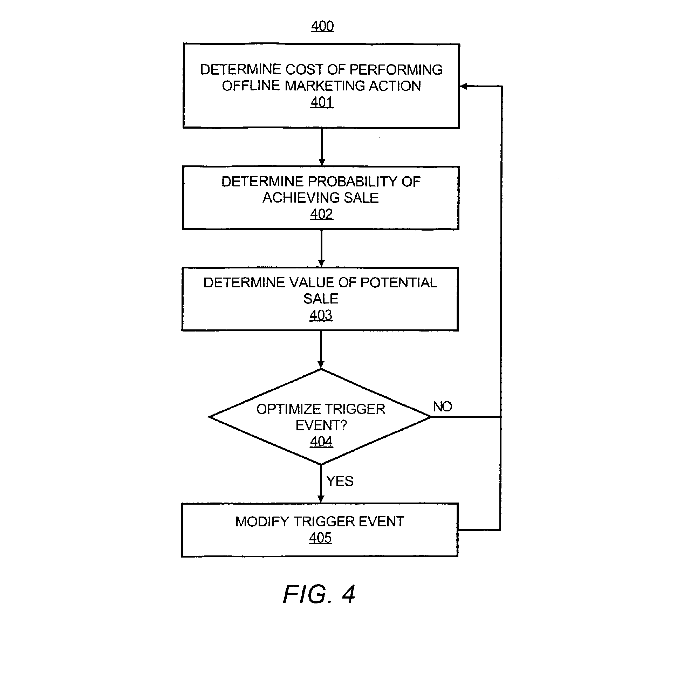

Figure 4 illustrates a method 400 for optimizing a trigger event, according to an embodiment. One or more of the steps of the method 400 may be performed by the trigger event optimizer 117. At step 401, a cost of performing an offline marketing in a trigger event is determined. The cost may be determined from external systems and managers. For example, the cost for performing a follow-up telephone call may include employee costs, service fees, etc. The cost may be provided to the marketing optimization system 100 by an external system or determined from cost information provided to the marketing optimization system 100.

At step 402, a probability of achieving a sale in response to executing the offline marketing action is determined. The probability may be determined from the experimental results performed by the experiment system 160 and/or from an analysis of historic sales data responsive to offline marketing. Conventional statistical analysis may be used to determine the probability.

At step 403, a value of the potential sale is determined. The value may be the profit from the sale or another sale metric or a combination of sales metrics may be used to determine value. Examples of sales metrics for determining value may include customer retention, up-sell potential, profit, etc.

At step 404, the trigger optimizer 117 determines whether to modify the trigger event based on the cost, the probability and the value. This may include multiplying the probability and the value or otherwise weighting the value based on the probability and comparing the result with the cost. If the cost exceeds the value, then the trigger event may be modified at step 405. Other statistical analysis may be used to compare cost to value. Modifying the trigger event at step 405 may include using a different condition or a different offline marketing action in the trigger event. The selection of the modification may based on an analysis that considers the same factors, such as the cost, probability, and value. Note that the optimization in the method 400 may be performed on existing trigger events or when creating new trigger events. Also, the method 400 may be repeated periodically or continuously.

One or more of the steps of the methods described herein and other steps described herein and one or more of the components of the systems described herein may be implemented as computer code stored on a non-transitory computer readable medium, such as memory and/or other types of data storage, and executed on a computer system, for example, by a processor, application-specific integrated circuit (ASIC), or other controller. The computer readable medium may be non-transitory. The code may exist as software program(s) comprised of program instructions in source code, object code, executable code or other formats. Examples of computer readable medium include conventional computer system RAM (random access memory), ROM (read only memory), EPROM (erasable, programmable ROM), EEPROM (electrically erasable, programmable ROM), hard drives, and flash memory.

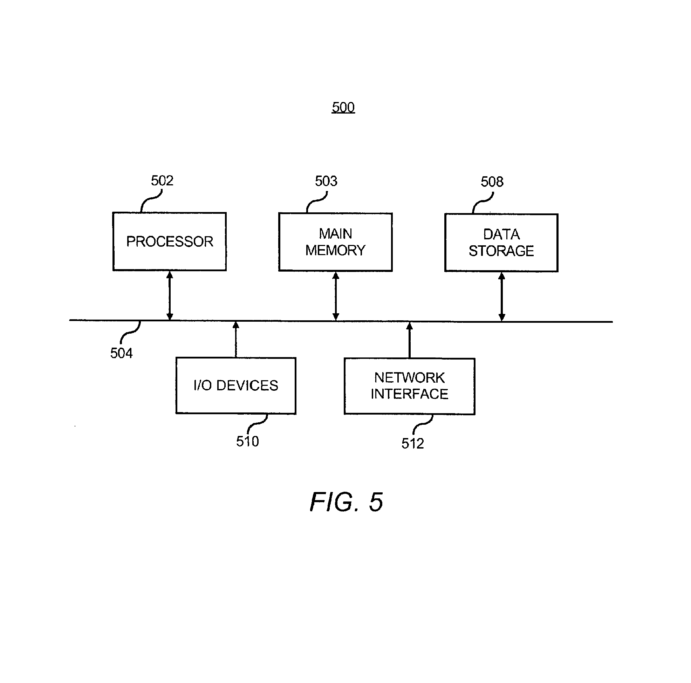

Figure 5 illustrates a hardware platform of a computer system 500 that may be used to execute computer code embodying the steps and functions described above. The computer system 500 may be a hardware platform for one or more of the components of the system 100. The computer system 500 includes a processor 502 that may implement or execute software instructions performing some or all of the methods, functions, and other steps described herein. Commands and data from the processor 502 are communicated over a communication bus 504. The computer system 500 also includes a main memory 503, such as a random access memory (RAM), where the software and data for processor 502 may reside during runtime, and a secondary data storage 508, which may be non-volatile and stores software and data. The memory and data storage are examples of computer readable storage mediums. The computer system 500 may include one or more I/O devices 510, such as a keyboard, a mouse, a display, etc. The computer system 500 may include a network interface 512 for connecting to a network. It will be apparent to one of ordinary skill in the art that other known electronic components may be added or substituted in the computer system 500.

While the embodiments have been described with reference to examples, those skilled in the art will be able to make various modifications to the described embodiments without departing from the scope of the claimed embodiments. For example, the optimizations performed by the system may be used to optimize trigger events for non-marketing events.

According to an aspect, a non-transitory computer readable medium storing computer readable instructions that when executed by a computer system perform a method for triggering one or more offline marketing actions based on captured online behavior is provided. The method may comprise: storing captured online behavior received from browsers or web servers; creating variables describing aspects of the captured online behavior; creating trigger events using at least one of the stored variables, wherein each trigger event includes at least one condition and an offline marketing action; comparing conditions in the trigger events with the captured online behavior; determining, by a computer system, from the comparison whether all the conditions are satisfied for at least one of the trigger events; and transmitting an instruction to an application to trigger the offline marketing action if all the conditions are satisfied for the at least one trigger event.

According to another aspect, the system may further comprise: a trigger event optimizer configured to optimize the at least one trigger event based on a cost of performing the offline marketing action and a probability of achieving a sale in response to executing the offline marketing action for the at least one trigger event.

According to yet another aspect, the trigger event optimizer may be further configured to determine whether to modify the at least one trigger event based on the cost, the probability and a value of the sale.

According to yet another aspect, the at least one trigger event may be modified to include a different condition or a different offline marketing action in response to determining the value of the sale is less than the cost, wherein the value is based on the probability.

According to yet another aspect, an experiment system may be configured to conduct an online experiment by applying different online web site experiences and offline marketing actions to users, and the trigger event optimizer determines the probability based on results of the experiment.

According to yet another aspect, the captured online behavior may comprise detectable trackable events on a web site.

According to yet another aspect, the cross-channel campaign engine may determine whether the detected trackable events for a visitor to the web site match the conditions for the at least one trigger event.

According to yet another aspect, an anonymous ID may be assigned to each visitor of the web site, and the detectable trackable events for each visitor are stored with the associated anonymous ID.

According to yet another aspect, the cross-channel campaign engine may be configured to match the anonymous ID is matched with contact information for at least some of the visitors and the contact information is used for an offline marketing action for the at least some of the visitors.

## Claims

1. A computer-implemented method for triggering one or more offline marketing actions based on captured online behavior, the method comprising:
storing captured online behavior received from browsers or web servers;
creating variables describing aspects of the captured online behavior;
creating trigger events using at least one of the stored variables, wherein each trigger event includes at least one condition and an offline marketing action;
comparing conditions in the trigger events with the captured online behavior;
determining, by a computer system, from the comparison whether all the conditions are satisfied for at least one of the trigger events; and
transmitting an instruction to an application to trigger the offline marketing action if all the conditions are satisfied for the at least one trigger event.

2. The computer-implemented method of claim 1, further comprising:
optimizing the at least one of trigger event based on a cost of performing the offline marketing action and a probability of achieving a sale in response to executing the offline marketing action for the at least one trigger event.

3. The computer-implemented method of claim 2, wherein optimizing at least one trigger event comprises:
determining the cost of performing the offline marketing action for the at least one trigger event;
determining the probability of achieving the sale;
determining a value of the sale; and
determining whether to modify the at least one trigger event based on the cost, the probability and the value.

4. The computer-implemented method of claim 2 or 3, further comprising:
modifying the at least one trigger event to include a different condition or a different offline marketing action in response to determining the value of the sale is less than the cost, wherein the value is based on the probability.

5. The computer-implemented method of any one of claims 2 to 4, wherein determining a probability of achieving a sale comprises:
conducting an online experiment by applying different online web site experiences and offline marketing actions to users; and
based on experimental results for the experiment, determining probabilities for achieving sales for the web site experiences and offline marketing actions.

6. The computer-implemented method of any one of the preceding claims, wherein creating variables describing aspects of the captured online behavior comprises:
for each variable, generating a graphic user interface allowing a user to utilize a predetermined syntax to enter an expression including an online behavior and a condition related to the online behavior; and
storing the variables, including the expressions, in a data storage device, wherein each expression is parsable to determine whether a condition in the expression is met.

7. The computer-implemented method of any one of the preceding claims, wherein storing captured online behavior comprises:
detecting trackable events on a web site for visitors; and
storing the detected trackable events, wherein the detected trackable events are the captured online behavior.

8. The computer-implemented method of claim 7, further comprising:
assigning an anonymous ID to each visitor of the web site; and
storing the detected trackable events for each visitor with the associated anonymous ID, wherein, for at least some of the visitors, the anonymous ID is matched with contact information for the at least some of the visitors and the contact information is used for an offline marketing action for the at least some of the visitors.

9. The computer-implemented method of any one of the preceding claims, wherein transmitting an instruction to an application to trigger the offline marketing action comprises:
sending a list to the application, wherein the list identifies users and the identified users receive marketing information associated with the at least one trigger event through an offline marketing channel.

10. The computer-implemented method of any one of the preceding claims, wherein the stored trigger events are customizable through a user interface and the method comprises
receiving a modified condition for a stored trigger event via the user interface; and
storing the modified condition as a condition for the stored trigger event.

11. A system for triggering one or more offline marketing actions based on online behavior, the system comprising:
a variable definer configured to create variables by generating a graphic user interface allowing a user to utilize a predetermined syntax to enter an expression, wherein the expression includes an online behavior and a condition related to the online behavior for each variable, and the variable definer is configured to store the variables, including the expressions;
a trigger definer configured to create trigger events using at least one of the stored variables, wherein each trigger event includes at least one condition and an offline marketing action; and
a cross-channel campaign engine configured to use a computer system to compare conditions in the trigger events with captured online behavior, to determine from the comparison whether all the conditions are satisfied for at least one of the trigger events, and to transmit an instruction to an application to trigger the offline marketing action if all the conditions are satisfied for the at least one trigger event.

12. A system according to claim 11, wherein the system is further operable to perform a method according to any one of the preceding claims.

13. Computer program product comprising computer readable instructions, which when loaded and run in a computer and/or computer network system, causes the computer system and/or the computer network system to perform operations according to a method of any one of claims 1 to 10.
